# EUROPEAN PATENT APPLICATION

(11) **EP 4 130 900 A1**
(43) Date of publication of application: **08.02.2023**
(21) Application number: 21776620.3
(22) Date of filing: 04.02.2021
(51) Int. Cl.: G05B 19/05

(54) **PROGRAM CREATION METHOD, PROGRAM CREATION ASSISTANCE DEVICE, AND PROGRAMMABLE CONTROLLER**

(30) Priority: 27.03.2020 JP 2020057744
(71) Applicant: Panasonic Intellectual Property Management Co., Ltd., Osaka-shi, Osaka 540-6207 (JP)
(72) Inventor: MASUYAMA, Tomohisa, Osaka-shi, Osaka 540-6207 (JP); TANAKA, Yoichi, Osaka-shi, Osaka 540-6207 (JP)
(74) Representative: SSM Sandmair
(86) International application number: PCT/JP2021/004044
(87) International publication number: WO 2021/192646

(57) **Abstract**

A program creation assistance device displays, on a display device, a program display screen displaying a program diagram, a tool display screen displaying a tool including a program element for creating the program diagram and a function block (FB) in which a series of processes including a plurality of functions is integrated into one. The assistance device has a guidance display mode. In the guidance display mode, a guidance display screen displaying the functions included in the FB and explanatory texts of the functions in association with each other is displayed.

## Description

### TECHNICAL FIELD

The present disclosure relates to a program creation method, a program creation assistance device, and a programmable controller.

### BACKGROUND ART

A control system using a programmable controller (hereinafter, simply referred to as a "controller") performs desired control in accordance with a program (user program) executed by the controller. For example, a motion control system that controls a plurality of motors includes a plurality of motor drivers that respectively drives the plurality of motors and a controller that controls the plurality of motor drivers. A developer who develops the control system creates a user program using a program creation assistance device mainly including a processing device such as a controller or a personal computer having an editing function. The user program is created by using, for example, a ladder-mode programming language. The developer creates a diagram (program diagram) in accordance with a programming language using the program creation assistance device. For example, in the case of the above ladder mode, the developer creates a ladder diagram using the program creation assistance device. The program creation assistance device generates a user program to be executed by the controller based on the created program diagram.

Meanwhile, it is necessary to set a plurality of operations depending on the devices constituting the system. For example, in the case of a servomotor used in the motion control system described above, various operations such as an operation for driving at a constant speed and an operation for accelerating or decelerating are possible, and it is necessary to set a plurality of operations including start to stop operations. For this reason, many settings are required, and errors such as setting omission or erroneous settings are likely to occur. Therefore, various devices capable of more easily developing a user program have been proposed.

An example of such devices is a device that develops a user program using a function block (hereinafter, referred to as "FB"). The FB is a program component that performs control in combination of a plurality of functions. An FB used for motion control is called a motion FB. For example, PTL 1 discloses a programming device that automatically generates a variable name related to each terminal of a motion FB selected by a user on a motion FB selection screen, and causes the user to input any setting value related to each variable name on a motion FB parameter setting screen and to create a base of a motion program. The automatic creation of the base portion of the program reduces the portion created by the user, and thus reduces the development period and the development cost.

PTL 2 discloses a program creation assistance device that displays a list of a plurality of functions related to a unit that generates a user program, displays a list of setting items of a device related to a selected function, and displays, on a display, description about setting of a selected item among the displayed items. This saves a time and an effort for referring to a document such as a manual.

However, in the programming device disclosed in PTL 1, a developer who is unfamiliar with motion FB cannot immediately decide which motion FB should be selected. Therefore, the selection takes a time, and there is room for improvement in simple program development. The program creation assistance device disclosed in PTL 2 selects a function of a unit and displays a description about a selected item among setting items of a device related to the selected function. For this reason, it takes time for an unskilled developer to select function of a unit and a setting item of a device, and there is still room for improvement in simple program development.

### Citation List

### Patent Literatures

PTL 1: Unexamined Japanese Patent Publication No. 2017-220142
PTL 2: Unexamined Japanese Patent Publication No. 2017-199226

### SUMMARY OF THE INVENTION

An object of the present disclosure is to provide a program creation method, a program creation assistance device, and a programmable controller that enable even a developer who is unfamiliar with programming of a control system to develop a simpler program.

A program creation method according to one aspect of the present disclosure, for displaying a program diagram on a display device and creating a user program, includes causing a processing device to display, on the display device, a program display screen displaying the program diagram, a tool screen displaying a tool including a program element for creating the program diagram and a function block having a series of processes including a plurality of functions is integrated into one, and a guidance display screen displaying the plurality of functions included in the function block and explanatory texts of the plurality of functions in association with each other.

A program creation assistance device according to another aspect of the present disclosure that creates a user program to be executed by a programmable controller includes an input device that performs an input operation for creating the user program, a display device that displays a program diagram of the user program, and a processing device that performs display on the display device in accordance with the input operation of the input device. The processing device displays, on the display device, a program display screen displaying the program diagram, a tool screen displaying a tool including a program element for creating the program diagram and a function block having a series of processes including a plurality of functions is integrated into one, and a guidance display screen displaying the plurality of functions included in the function block and explanatory texts of the plurality of functions in association with each other.

A programmable controller according to another aspect of the present disclosure that displays a program diagram on a display device and creates a user program causes the display device to display a program display screen displaying the program diagram, a tool screen displaying a tool including a program element for creating the program diagram and a function block having a series of processes including a plurality of functions is integrated into one, and a guidance display screen displaying the plurality of functions included in the function block and explanatory texts of the plurality of functions in association with each other.

The above aspects of the present disclosure can provide a program creation method, a program creation assistance device, and a programmable controller that enable simpler program development.

### BRIEF DESCRIPTION OF THE DRAWINGS

Fig. 1 is a schematic configuration diagram of a control system and a program creation assistance device.
Fig. 2 is an explanatory diagram illustrating a program creation screen displayed on a display device.
Fig. 3 is an explanatory diagram illustrating a program creation screen for inserting a box.
Fig. 4 is an explanatory diagram illustrating an input assistant screen.
Fig. 5 is an explanatory diagram illustrating an input assistant screen.
Fig. 6 is an explanatory diagram illustrating a program creation screen for inserting a function block.
Fig. 7 is an explanatory diagram of a declaration screen.
Fig. 8 is an explanatory diagram illustrating a state in which a command is developed as a program.
Fig. 9 is an explanatory diagram illustrating input of operand.
Fig. 10 is an explanatory diagram illustrating the program creation screen during use of a function block guidance.
Fig. 11 is an explanatory diagram of the function block guidance.
Fig. 12 is an explanatory diagram of command selection.
Fig. 13 is an explanatory diagram illustrating input of operand.
Fig. 14 is an explanatory diagram of an automatic declaration screen.
Fig. 15 is an explanatory diagram illustrating a state in which a command is developed as a program.
Fig. 16 is an explanatory diagram illustrating a program creation screen during use of a tool box.
Fig. 17 is an explanatory diagram illustrating insertion of a box.
Fig. 18 is an explanatory diagram illustrating input of operand.
Fig. 19 is an explanatory diagram illustrating a state in which a command is developed as a program.

### DESCRIPTION OF EMBODIMENT

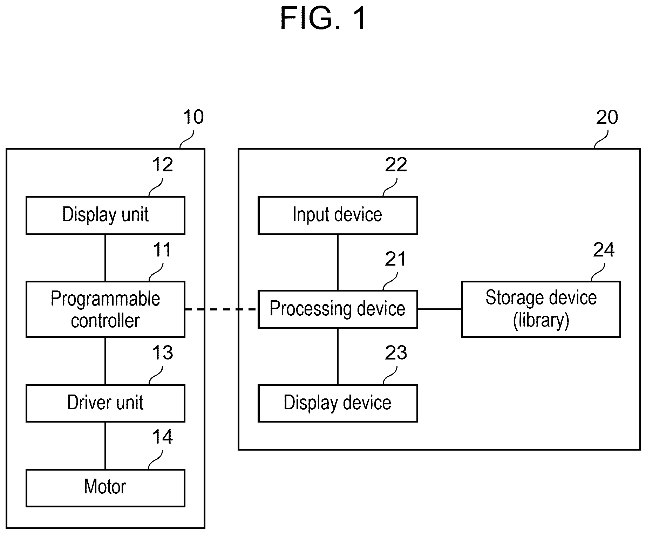

One exemplary embodiment will be described below. Fig. 1 is a schematic configuration diagram of control system 10 and program creation assistance device 20 according to one exemplary embodiment.

As illustrated in Fig. 1, program creation assistance device (hereinafter, simply referred to as "assistance device") 20 assists development of a user program to be executed by programmable controller (programmable logic controller: PLC) (hereinafter, simply referred to as "controller") 11 of control system 10.

The user program to be executed by controller 11 is created by using a programming language. Examples of the programming language include a ladder diagram (LD), a function block diagram (FBD), and a structured text (ST). Assistance device 20 assists creation of a user program using one or a combination of these programming languages.

Examples of controller 11 include a motion controller and a PLC. Control system 10 in which the motion controller is used as controller 11 is called a motion control system.

Control system 10 is a motion control system, and includes controller 11, display unit 12, driver unit 13, and a plurality of motors 14. Fig. 1 illustrates one driver unit 13 and one motor 14. The plurality of driver units 13 and motors 14 according to the configuration of the control system are connected to controller 11. Driver unit 13 is an extension unit to be connected to controller 11. As the extension unit, in addition to driver unit 13, an input and output unit that inputs and outputs a signal, a voltage, or the like can be connected to controller 11. Motor 14 is, for example, a servomotor. Controller 11 drives motor 14 via driver unit 13 based on a user program to be stored.

Assistance device 20 has processing device 21, input device 22, display device 23, and storage device 24. Note that storage device 24 may be included in processing device 21. Input device 22 and display device 23 may be configured integrally with processing device 21.

Input device 22 is a keyboard, a mouse, a touch pad, or the like, and is used for operations such as selection, input, and determination necessary for creating a program.

Display device 23 displays various screens for performing selection operations or setting operations on input device 22 during creation of a program.

Storage device 24 stores an application program for creating a user program through controller 11 and a library for creating the user program. The library includes various types of data necessary for creating the user program. The various types of data include information about an extension unit, a device, and the like that can be used to construct the control system. The library includes information about a program element and a function block (FB) used to create a program diagram such as a ladder diagram. The FB is a program component that has one or more input parameters or output parameters and performs control using one function or control using a combination of a plurality of functions. An FB used for motion control is called a motion FB.

Processing device 21 executes an application program stored in storage device 24 and creates a user program. Processing device 21 then displays a program creation screen on display device 23 based on the operation of input device 22 and the various data stored in the library of storage device 24.

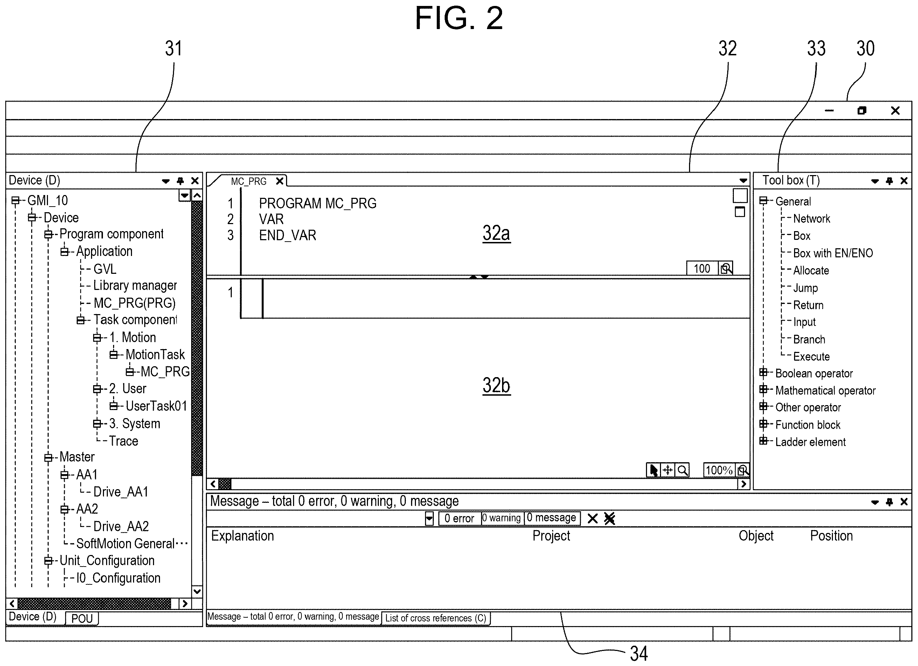

Fig. 2 is an explanatory diagram illustrating program creation screen 30 displayed on display device 23.

Program creation screen 30 includes device display screen 31, program display screen 32, tool display screen (tool box) 33, and variable display screen 34.

Device display screen 31 indicates various devices used for constructing the control system. The various devices include an extension unit connected to controller 11 and a device controlled via the extension unit. For example, in a case where the motion control system is constructed as the control system, the device includes various motors such as a servomotor and a motor driver that drives the motors.

Tool display screen 33 indicates tools for creating a program diagram. The tools displayed on tool display screen 33 include a program element such as a relay, an FB including a plurality of functions and a series of integrated operations, and the like.

Program display screen 32 indicates a user program created by a user. Program display screen 32 includes first display area 32a on which a program list described in a program language (for example, a ladder program) is displayed and second display area 32b on which a program diagram created by a user is displayed. The user disposes the program element and the FB in second display area 32b to create a program diagram. Assistance device 20 creates a user program of this program diagram.

Assistance device 20 according to the present exemplary embodiment has an input assistant mode, a guidance display mode, and a direct input mode.

In the input assistant mode, an input assistant screen displaying an explanatory text of a selected FB is displayed. This mode enables an FB to be used without referring to a document or the like describing an explanatory text, and thus enables a program to be easily created.

In the guidance display mode, a list of the functions of an FB is displayed and explanatory texts of the functions are displayed in association with the functions. This mode enables easy understanding of the functions included in the FB and the description about the functions. Therefore, even a user who is unfamiliar with the FB can easily understand the functions executed in the FB, and thus can more easily create a program.

In the direct input mode, a block is disposed on the program display screen, and a user can directly input an operand of the disposed block. In this mode, a program diagram can be created in a short time by directly inputting the operand. For this reason, a program can be created by a user who is familiar with creating the program diagram. As a result, when many users who are more familiar with creating a program select this mode, a program can be created more efficiently.

### [Input assistant mode]

Next, the input assistant mode will be described.

In the input assistant mode, an explanatory text of a selected FB is displayed.

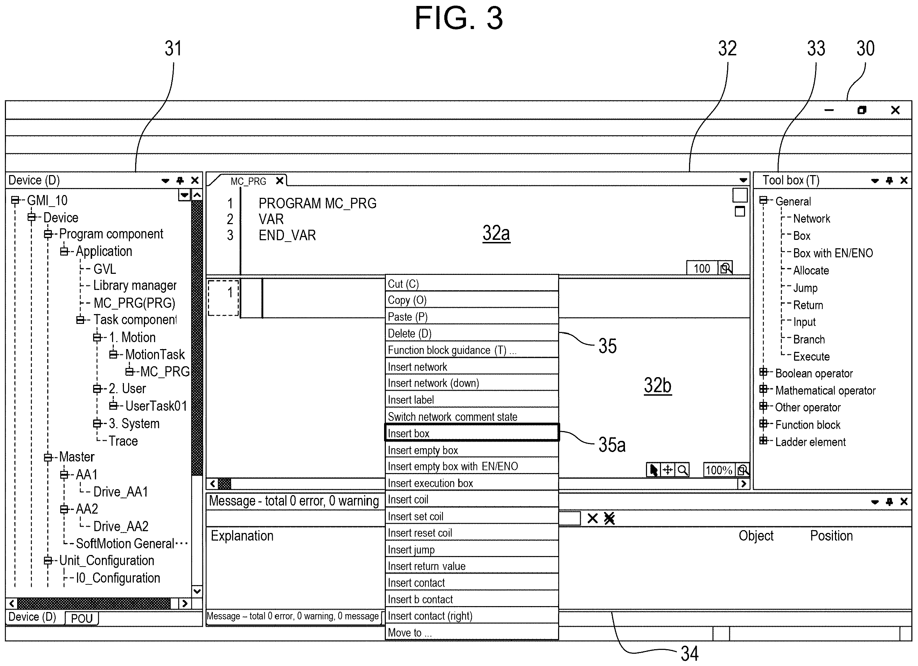

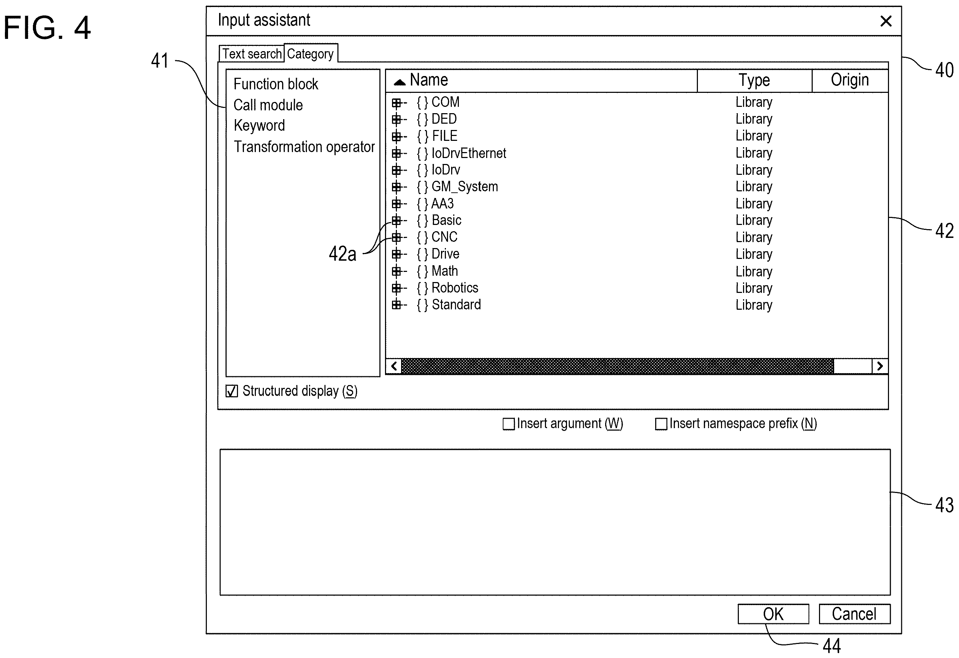

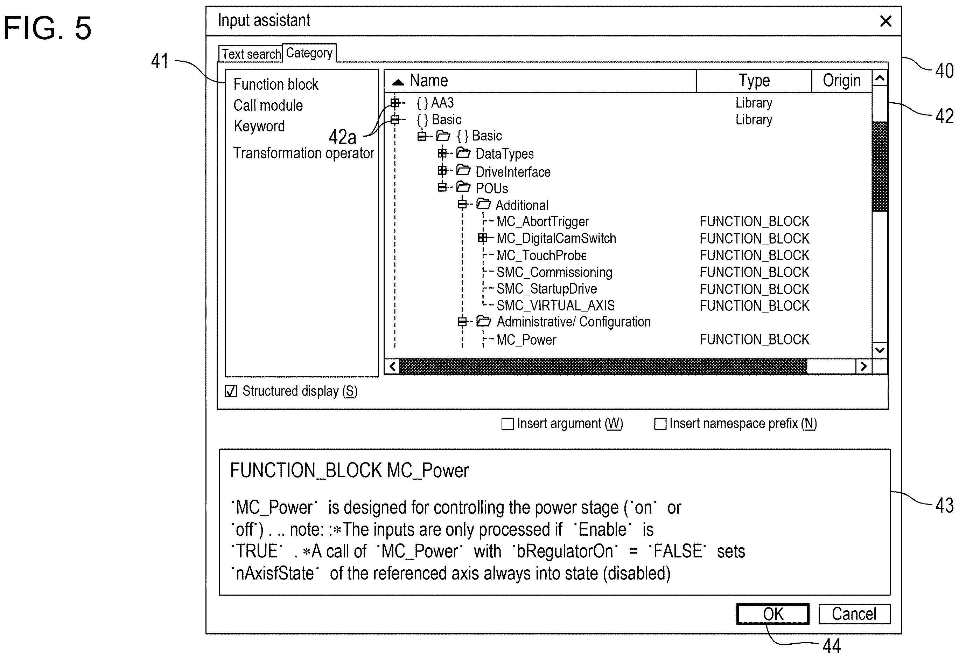

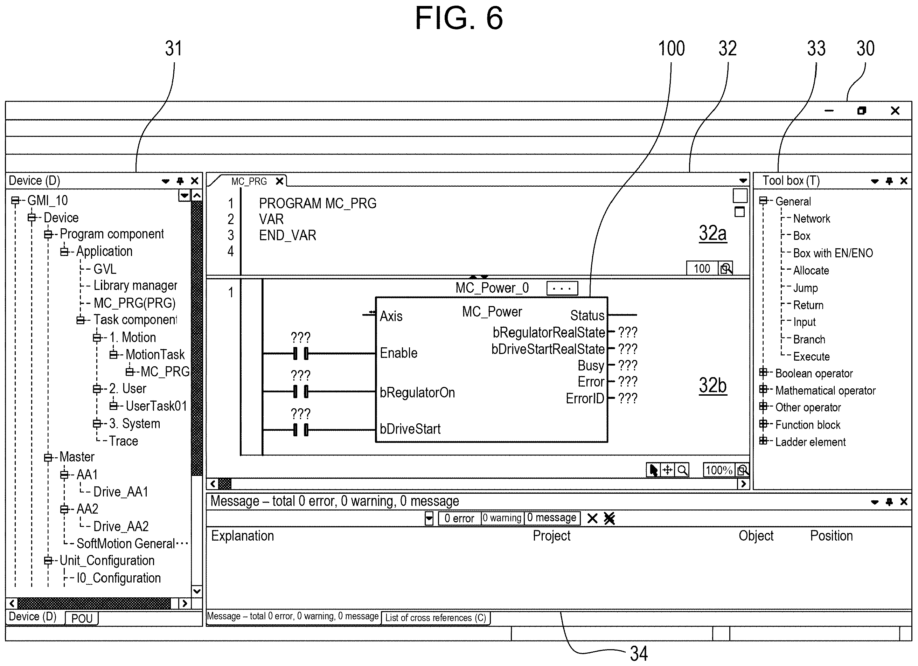

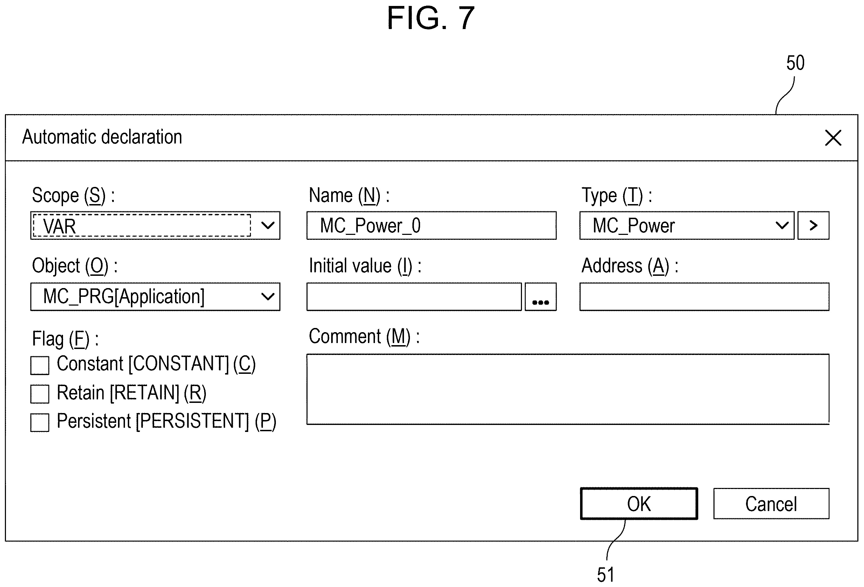

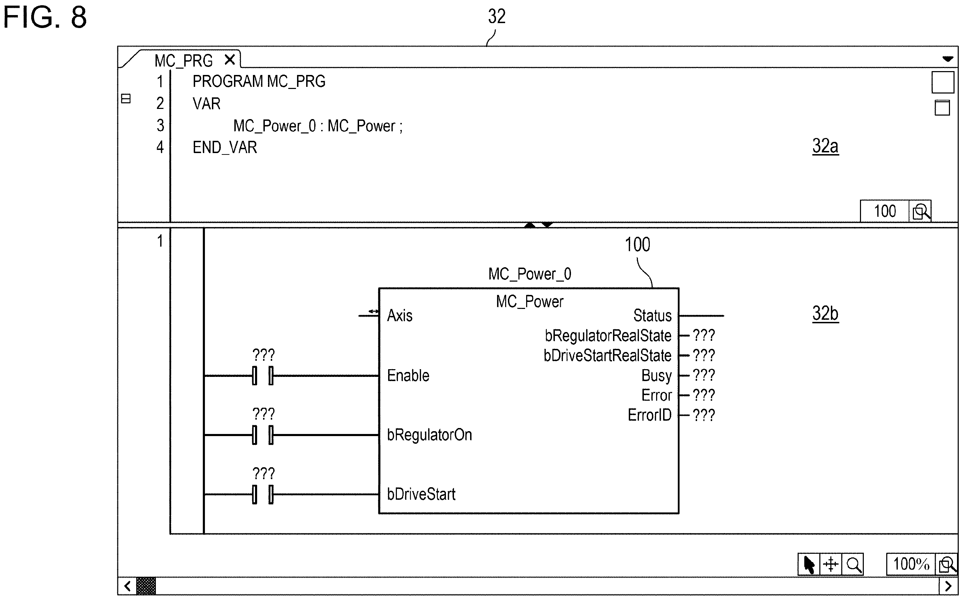

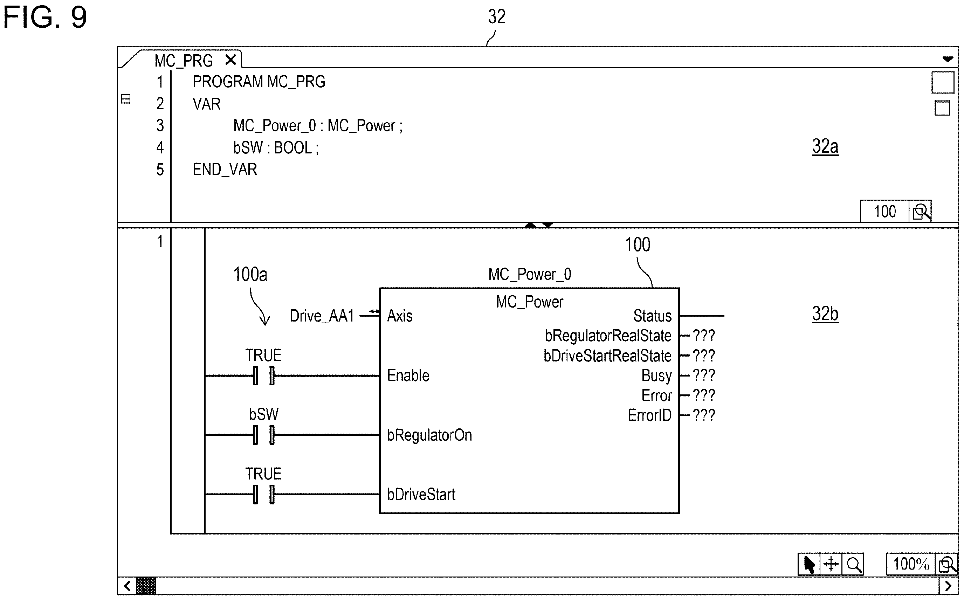

Figs. 3 to 9 each illustrate an example of a procedure of disposing an FB in the input assistant mode. Fig. 3 is an explanatory diagram illustrating the program creation screen for inserting a box. Fig. 4 is an explanatory diagram illustrating the input assistant screen. Fig. 5 is an explanatory diagram illustrating the input assistant screen. Fig. 6 is an explanatory diagram illustrating the program creation screen for inserting a function block. Fig. 7 is an explanatory diagram of a declaration screen. Fig. 8 is an explanatory diagram illustrating a state in which a command is developed as a program. Fig. 9 is an explanatory diagram illustrating input of operand.

First, as illustrated in Fig. 3, pull-down menu 35 is displayed based on a predetermined operation, such as an operation of a right button of a mouse or the like. "Insert box" 35a is selected from pull-down menu 35. Then, processing device 21 in Fig. 1 displays input assistant screen 40 illustrated in Fig. 4 on display device 23.

As illustrated in Fig. 4, input assistant screen 40 includes area 41 displaying a category including components used for creating a program, list display area 42 displaying names and types of libraries or components included in the selected category, and explanation display area 43 in which an explanation text of a selected component is displayed. In area 41 illustrated in Fig. 4, "function block", "module call", "keyword", and "transformation operator" are displayed as a category including components. Further, in list display area 42 illustrated in Fig. 4, names of libraries including one or more components are displayed.

When the libraries are displayed in list display area 42 and development button 42a illustrated on the left side of the name of the library is clicked, the components included in the library can be displayed as illustrated in Fig. 5. Thereafter, by selecting a name indicated in list display area 42, an explanation text of the component having the name is displayed in explanation display area 43. In Fig. 5, the explanatory text of FB "MC_Power" displayed in list display area 42 is displayed in explanation display area 43. Then, by clicking confirmation button (hereinafter, "OK button") 44 displayed on input assistant screen 40, as illustrated in Fig. 6, block 100 of the selected FB "MC _Power" is disposed in second display area 32b of program display screen 32.

Next, in a state where block 100 of program display screen 32 is displayed, declaration screen 50 illustrated in Fig. 7 is displayed by performing a predetermined operation such as an operation of an enter key.

Declaration screen 50 is a screen for inputting and setting information such as the name or operand of the FB "MC_Power" which is block 100. By inputting necessary information on declaration screen 50 and clicking OK button 51, the command of the FB is developed as a program, that is, "MC_Power_0: MC_Power:" is displayed on first display area 32a as illustrated in Fig. 8.

As illustrated in Fig. 9, operands 100a are manually input. At this time, the operands can be set based on the explanation text illustrated in Fig. 5.

As described above, by selecting an FB and displaying an explanatory text of the selected FB, even a user who is not familiar with the selected FB "MC_Power" can create a user program using the FB.

### [Guidance display mode]

Next, the guidance display mode will be described.

In the guidance display mode, an explanatory text of a function included in an FB is displayed.

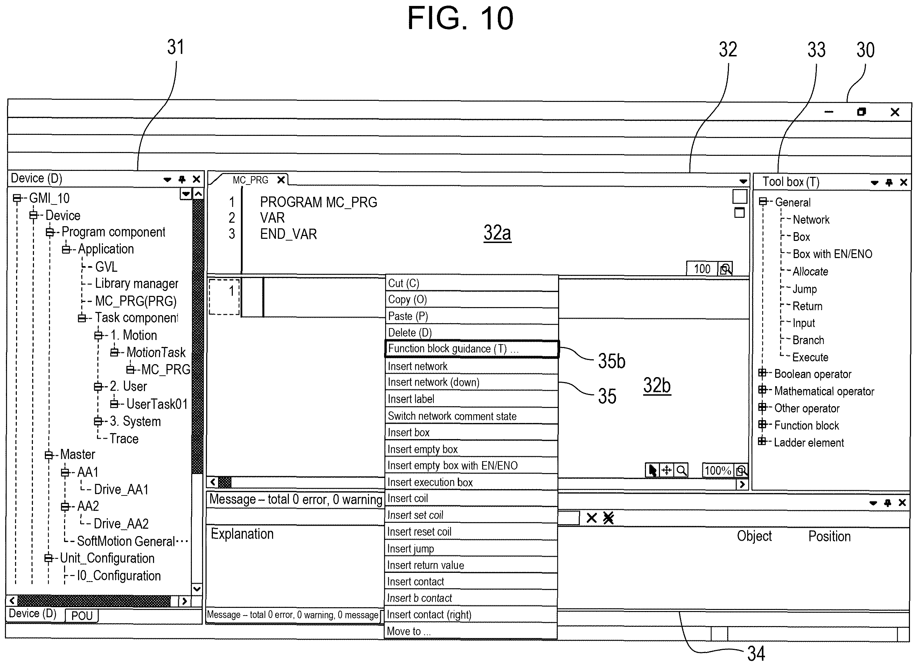

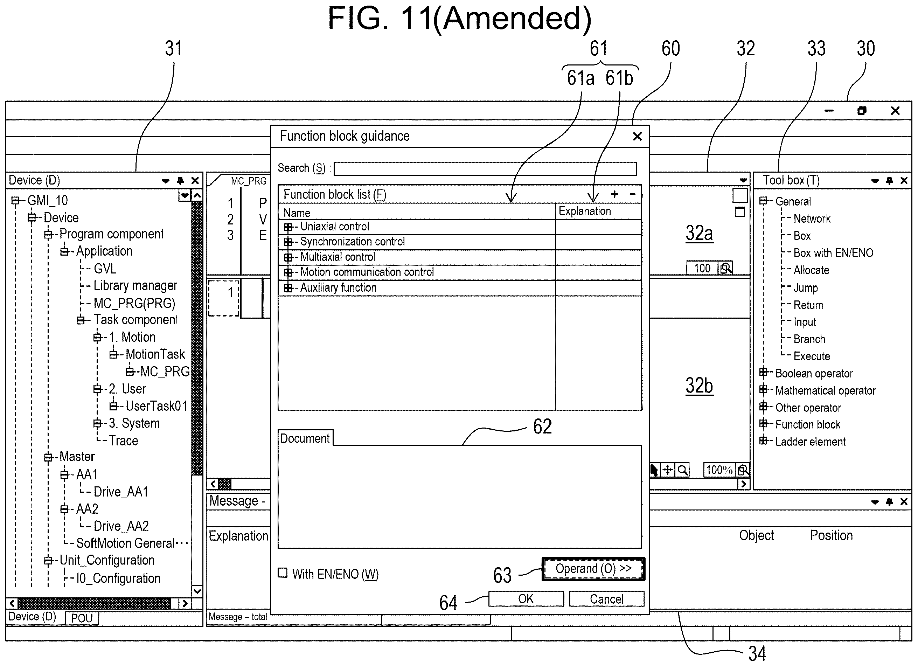

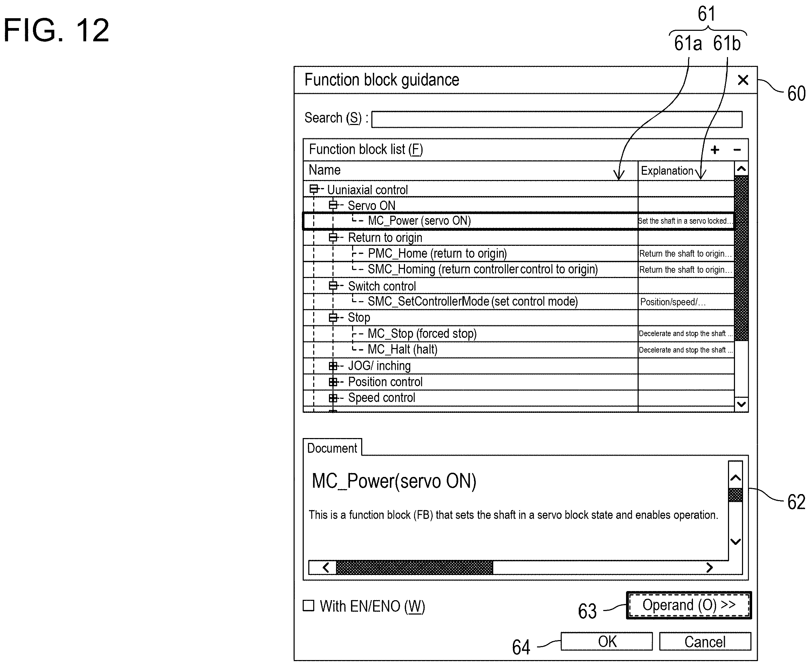

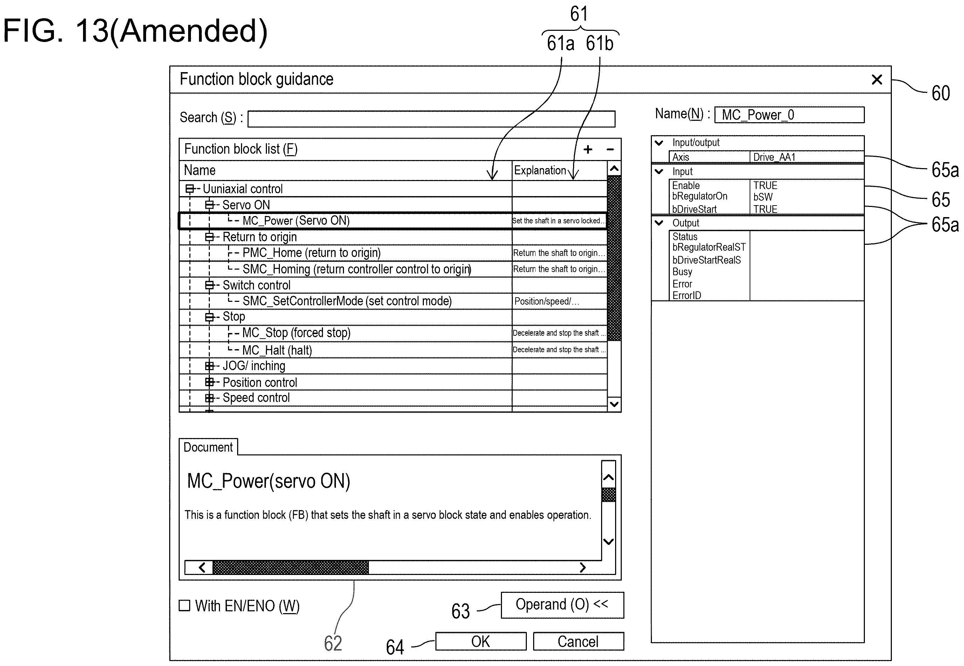

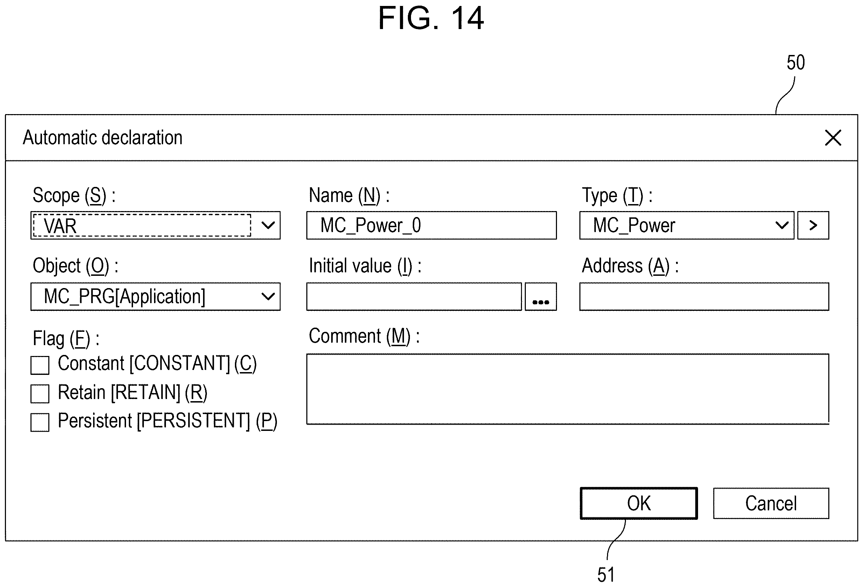

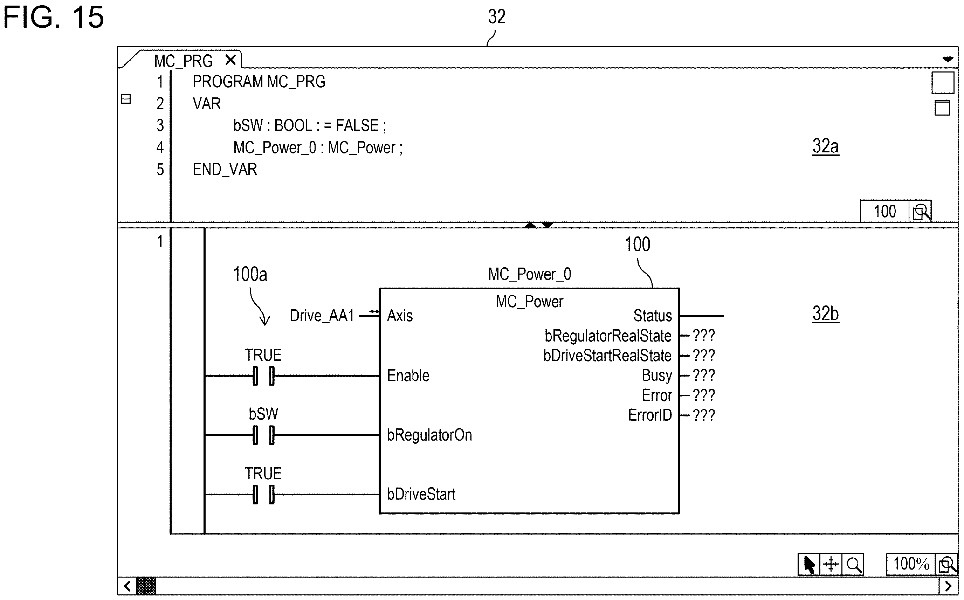

Figs. 10 to 15 each illustrate an example of a procedure of disposing an FB in the guidance display mode. Fig. 10 is an explanatory diagram illustrating the program creation screen during use of a function block guidance. Fig. 11 is an explanatory diagram of the function block guidance. Fig. 12 is an explanatory diagram of command selection. Fig. 13 is an explanatory diagram illustrating input of operand. Fig. 14 is an explanatory diagram of an automatic declaration screen. Fig. 15 is an explanatory diagram illustrating a state in which a command is developed as a program.

As illustrated in Fig. 10, pull-down menu 35 is displayed based on a predetermined operation such as an operation of a right button of a mouse or the like. The guidance display mode is set by selecting "function block guidance" 35b from pull-down menu 35.

Then, processing device 21 in Fig. 1 displays guidance display screen 60 illustrated in Fig. 11 on display device 23. Guidance display screen 60 has list display area 61 for displaying a list of FBs. List display area 61 includes name display area 61a and explanation display area 61b.

As illustrated in Fig. 12, on name display area 61a, the name of FB and the names of functions included in the FB are displayed. On explanation display area 61b, an explanation text of each function is displayed in association with each function. For example, an explanatory text of the function is displayed on the right of the name of the function in the FB. As a result, the function of the FB and the explanatory text associated with the function can be easily checked. Then, it is possible to easily check what functions the FB is configured by and what kind of the functions they are.

Guidance display screen 60 further includes document display area 62. On document display area 62, an explanatory text associated with the function of the selected FB is displayed.

In Fig. 12, the names of functions included in the FB "uniaxial control" are displayed as a list on name display area 61a, and explanatory texts of the functions are displayed on explanation display area 61b in association with the functions. In Fig. 12, an explanatory text of a selected function "MC_Power (servo ON)" is displayed on document display area 62.

Guidance display screen 60 also indicates operand input button 63. When operand input button 63 is operated, guidance display screen 60 indicates operand input section 65 with the screen area being enlarged as illustrated in Fig. 13. When operand input button 63 is operated while operand input section 65 is displayed, operand input section 65 is closed, that is, guidance display screen 60 is in the state illustrated in Fig. 12.

Operand input section 65 includes input field 65a for inputting information to an input item such as an argument used for the selected function. Operand input section 65 enables information such as arguments for functions to be set.

Assistance device 20 determines whether the information input in input field 65a of operand input section 65 is related to the input item in input field 65a. For example, when the input item is a numerical value such as a motor speed, assistance device 20 determines whether the input argument is a numerical value in a settable range. When the input item is a character string designating a control axis, assistance device 20 determines whether the input character string is correct. A preset reference value or the like may be displayed inside or outside input field 65a of operand input section 65. Information necessary for determining a settable numerical range or reference value is stored in advance in storage device 24 in Fig. 1, for example. When determining that appropriate information is input, assistance device 20 sets the information as valid. On the other hand, when determining that appropriate information is not input, assistance device 20 does not set the information.

This makes it possible to reduce programming setting errors and shorten the time required for program creation and the time required for debugging.

Assistance device 20 notifies that the input information is not set. As a notification method, for example, input field 65a of operand input section 65 is set to a color (for example, red) different from a color in a normal case, or input field 65a is blinked. The color of the characters input in input field 65a may be a color different from a color at the time of input (for example, black at the time of input and red in an anomalous state), or the characters in input field 65a may be blinked. A portion where appropriate information is not input may be displayed on guidance display screen 60 using a character string or the like. As the notification, a beep sound or the like may be emitted. This makes it possible to notify a user that erroneous input occurs for the set information.

Guidance display screen 60 indicates OK button 64. Declaration screen 50 illustrated in Fig. 14 is displayed by operating OK button 64.

Declaration screen 50 is a screen for inputting and setting information such as the name or operand of the FB "MC_Power" which is block 100. By inputting necessary information on declaration screen 50 and clicking OK button 51, the information input in operand input section 65 illustrated in Fig. 3 is reflected, and the command of the FB is developed as a program as illustrated in Fig. 15.

As described above, by displaying the explanatory text of the function of the FB, even a user who is not familiar with the selected FB "MC _Power" can create a user program using the FB. By developing and displaying operand input section 65 on guidance display screen 60 displaying an explanatory text, even a user who is a beginner of an FB can create a user program using the FB.

### [Direct input mode]

Next, the direct input mode will be described.

In the direct input mode, a block is directly disposed on the program display screen, and an operand is directly input.

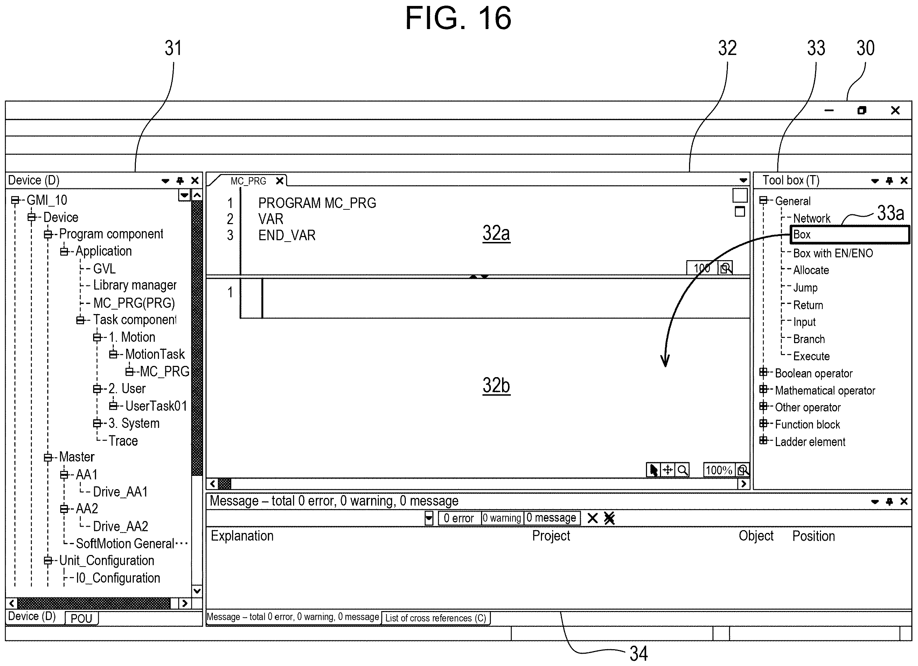

Figs. 16 to 19 each illustrate an example of a procedure of disposing the FB in the direct input mode.

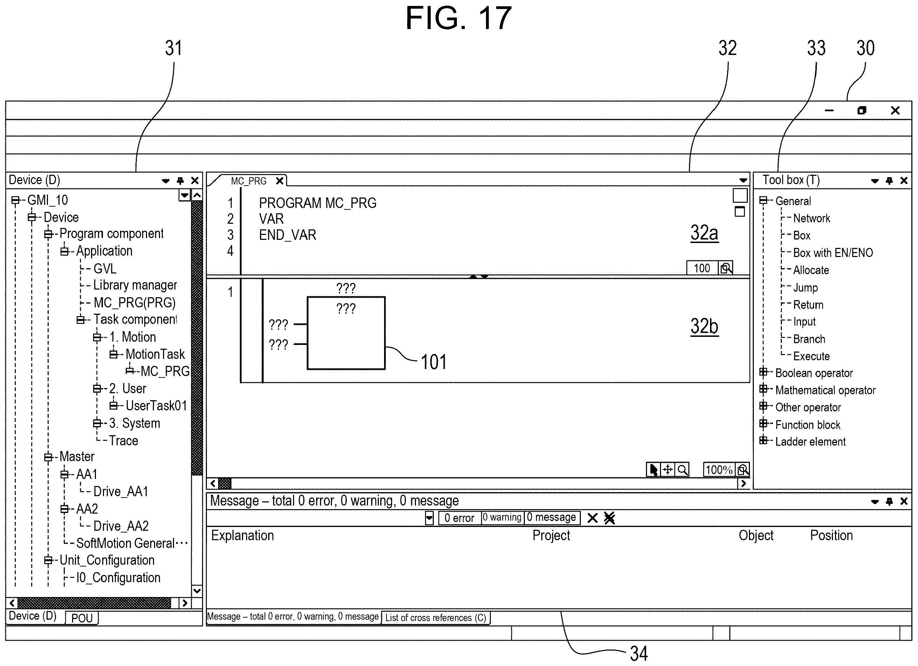

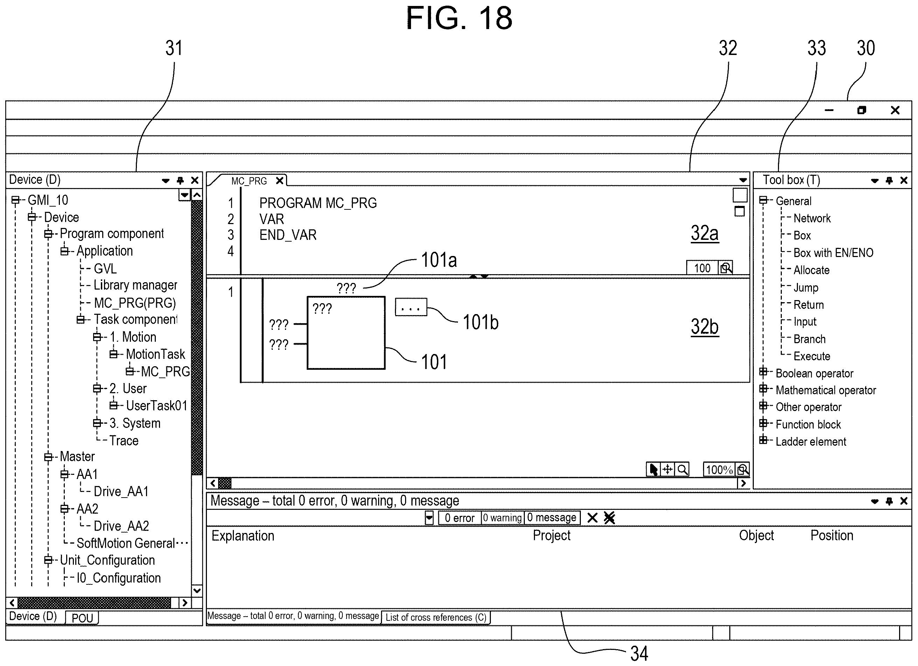

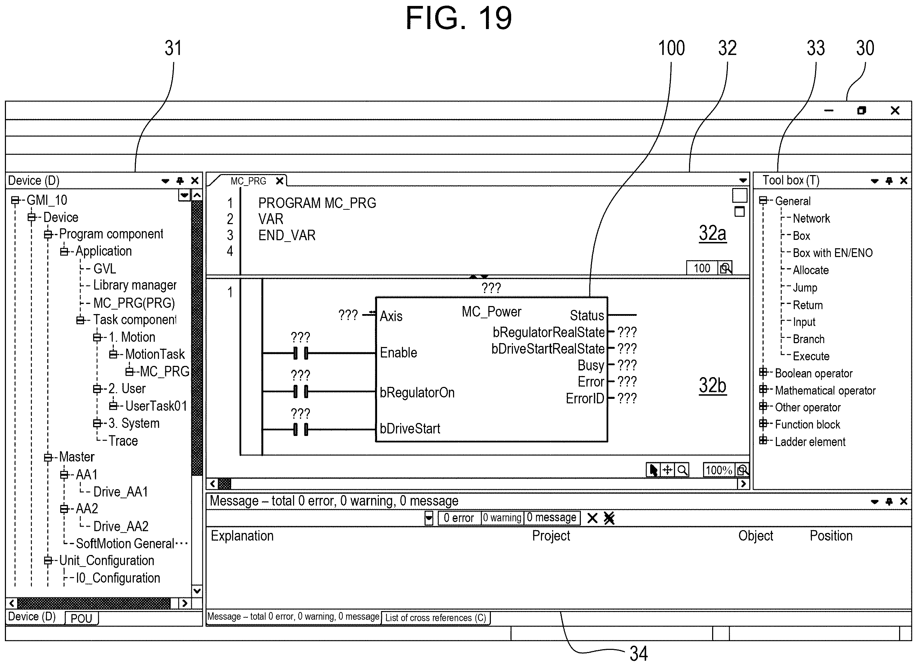

As illustrated in Fig. 16, box 33a is dragged from tool display screen 33 to second display area 32b of program display screen 32, and box 101 is disposed as illustrated in Fig. 17. As illustrated in Fig. 18, predetermined areas 101a, 101b of disposed box 101 are clicked to directly input operands. Accordingly, as illustrated in Fig. 19, block 100 of the FB is disposed on second display area 32b.

In such a manner, by directly setting information such as operands to the inserted block, a user who is familiar with the FB can create a user program using the FB in a short time without the trouble of displaying guidance display screen 60 and input assistant screen 40.

### (Effects)

The present exemplary embodiment described above achieves the following effects.
(1) Assistance device 20 displays, on display device 23, program display screen 32 displaying a program diagram, and tool display screen 33 displaying a tool including a program element for creating a program diagram and an FB in which a series of processes including a plurality of functions is integrated into one. Assistance device 20 further includes the guidance display mode. In the guidance display mode, guidance display screen 60 is displayed with the functions included in the FB being associated with the explanatory texts of the functions. The guidance display mode enables the functions included in the FB and the explanatory texts of the functions to be easily understood. Therefore, even a user who is unfamiliar with the FB can easily understand the functions executed in the FB, and thus can more easily create a program.
(2) Assistance device 20 determines whether the information input in input field 65a of operand input section 65 is related to the input item in input field 65a. For example, when the input item is a numerical value such as a motor speed, assistance device 20 determines whether the input argument is a numerical value in a settable range. A preset reference value may be displayed inside or outside input field 65a of operand input section 65. Information necessary for determining a settable numerical range or reference value is stored in advance in storage device 24 in Fig. 1, for example. When determining that appropriate information is input, assistance device 20 sets the information as valid. On the other hand, when determining that appropriate information is not input, assistance device 20 does not set the information. This makes it possible to reduce programming setting errors and shorten the time required for program creation and the time required for debugging.
(3) Assistance device 20 has the input assistant mode. In the input assistant mode, an input assistant screen displaying an explanatory text of a selected FB is displayed. This mode enables an FB to be used without referring to a document or the like describing an explanatory text, and thus enables a program to be easily created.

### (Modifications)

The above exemplary embodiment may be carried out in the following mode. The above exemplary embodiment and the following modifications can be carried out in combination with each other within a technically compatible range.
- In the above exemplary embodiment, a programmable controller having a program editing function may be used to edit a user program to be executed by the programmable controller. In this case, in the editing step, input device 22 and display device 23 similar to those in the above exemplary embodiment are connected to the programmable controller. Guidance display screen 60 or the like may be displayed by using display unit 12. Storage device 24 illustrated in Fig. 1 may be connected to the programmable controller as a library used for editing.
- In the above exemplary embodiment, the input assistant mode, the guidance display mode, and the direct input mode are provided, but the assistance device may include only the guidance display mode. Alternatively, the assistance device may include the guidance display mode and the direct input mode.

### (Conclusion)

A program creation method according to the present exemplary embodiment for displaying a program diagram on display device 23 and creating a user program includes causing processing device 21 to display, on display device 23, program display screen 32 displaying the program diagram, a tool screen displaying a tool including a program element for creating the program diagram and a function block having a series of processes including a plurality of functions is integrated into one, and guidance display screen 60 displaying the plurality of functions included in the function block and explanatory texts of the plurality of functions in association with each other.

This makes it possible to provide the program creation method that enables simpler program development.

In addition, processing device 21 may display a list of a plurality of function blocks and display development buttons 42a respectively related to the plurality of function blocks on guidance display screen 60, and may develop and display, on guidance display screen 60, a plurality of functions included in a function block related to operated development button 42a, based on the operation of development button 42a to display explanatory texts related to the plurality of functions in association with each other.

Further, processing device 21 may display operand input button 63 on guidance display screen 60, may select a function and operate operand input button 63, and may display operand input section 65 related to the selected function on guidance display screen 60.

Processing device 21 may determine whether information input to operand input section 65 is related to the function block, and may set the input information when the input information is related to the function block, and may not set the input information when not related.

Processing device 21 may display confirmation button 44 on guidance display screen 60, and may display declaration screen 50 for inputting and setting information about the function block on display device 23 based on the operation of confirmation button 44.

Processing device 21 may display confirmation button 44 on declaration screen 50, and may display the function block on program display screen 32 based on the operation of confirmation button 44.

Further, the program creation method may include a guidance display mode for displaying guidance display screen 60 and an input assistant mode for displaying input assistant screen 40 based on a box input operation on program display screen 32. Input assistant screen 40 may include list display area 42 on which a list of the plurality of function blocks is displayed and explanation display area 43 on which an explanatory text of a function block selected from the plurality of function blocks displayed on list display area 42 is displayed.

Further, the function block may be a motion function block that controls motor 14 as a device.

Program creation assistance device 20 according to the present exemplary embodiment that creates a user program to be executed by programmable controller 11 includes input device 22 that performs an input operation for creating the user program, display device 23 that displays a program diagram of the user program, and processing device 21 that performs display on display device 23 in accordance with the operation of input device 22. Processing device 21 displays, on display device 23, program display screen 32 displaying the program diagram, a tool screen displaying a tool including a program element for creating the program diagram and a function block having a series of processes including a plurality of functions is integrated into one, and guidance display screen 60 displaying the plurality of functions included in the function block and explanatory texts of the plurality of functions in association with each other.

This makes it possible to provide the program creation assistance device that enables simpler program development.

In addition, processing device 21 may display a list of the plurality of function blocks on guidance display screen 60, may display development buttons 42a respectively associated with the plurality of function blocks, may develop and display a plurality of functions included in a function block associated with operated development button 42a, based on the operation of development button 42a, and may display explanatory texts related to the plurality of functions in association with each other.

Further, processing device 21 may display operand input button 63 on guidance display screen 60, select a function, operate operand input button 63, and thus may display operand input section 65 related to the selected function on guidance display screen 60.

Processing device 21 makes a determination whether the information input to operand input section 65 is related to the function block, and may set the input information when the input information is related to the function block, and may not set the input information when not related.

Processing device 21 may display confirmation button 44 on guidance display screen 60, and may display declaration screen 50 for inputting and setting information about the function block on display device 23 based on the operation of confirmation button 44.

Processing device 21 may display confirmation button 44 on declaration screen 50, and may display the function block on program display screen 32 based on the operation of confirmation button 44.

A guidance display mode for displaying guidance display screen 60 and an input assistant mode for displaying input assistant screen 40 based on a box input operation on program display screen 32 may be provided. Input assistant screen 40 may include list display area 42 on which a list of the plurality of function blocks is displayed, and explanation display area 43 on which an explanatory text of a function block selected from the plurality of function blocks displayed on list display area 42 is displayed.

Further, the function block may be a motion function block that controls motor 14 as a device.

Programmable controller 11 according to the present exemplary embodiment that displays a program diagram on display device 23 and creates a user program causes display device 23 to display program display screen 32 displaying the program diagram, a tool screen displaying a tool including a program element for creating the program diagram and a function block having a series of processes including a plurality of functions is integrated into one, and guidance display screen 60 displaying the plurality of functions included in the function block and explanatory texts of the plurality of functions in association with each other.

This makes it possible to provide the programmable controller that enables simpler program development.

### INDUSTRIAL APPLICABILITY

The technique of the present disclosure can provide a program creation method, a program creation assistance device, and a programmable controller that enable simpler program development.

### REFERENCE MARKS IN THE DRAWINGS

- 10: control system
- 11: controller
- 12: display unit
- 13: driver unit
- 14: motor
- 20: program creation assistance device
- 21: processing device
- 22: input device
- 23: display device
- 24: storage device
- 30: program creation screen
- 31: device display screen
- 32: program display screen
- 32a: first display area
- 32b: second display area
- 33: tool display screen
- 33a: box
- 34: variable display screen
- 35: pull-down menu
- 40: input assistant screen
- 41: area
- 42: list display area
- 42a: development button
- 43: explanation display area
- 44: confirmation button
- 50: declaration screen
- 51: OK button
- 60: guidance display screen
- 61: list display area
- 61a: name display area
- 61b: explanation display area
- 62: document display area
- 63: operand input button
- 64: OK button
- 65: operand input section
- 65a: input field
- 100: block
- 100a: operand
- 101: box
- 101a: predetermined area
- 101b: predetermined area

## Claims

1. A program creation method for displaying a program diagram on a display device and creating a user program, the method comprising causing a processing device to display, on the display device:
a program display screen displaying the program diagram;
a tool screen displaying a tool including a program element for creating the program diagram and a function block having a series of processes in which a plurality of functions is integrated into one; and
a guidance display screen displaying the plurality of functions included in the function block and explanatory texts of the plurality of functions in association with each other.

2. The program creation method according to Claim 1, further comprising causing the processing device to:
display a list of a plurality of the function blocks and development buttons respectively related to the plurality of the function blocks on the guidance display screen; and
develop and display, on the guidance display screen, a plurality of functions included in a function block among the plurality of the function blocks, based on an operation of a development button of the displayed development buttons to display the explanatory texts related to the plurality of functions in association with the plurality of functions.

3. The program creation method according to Claim 1 or 2, comprising causing the processing device to display, on the guidance display screen:
an operand input button; and
an operand input section related to a function selected from the plurality of functions by selecting the function and operating the operand input button.

4. The program creation method, according to Claim 3, comprising causing the processing device to determine whether information input to the operand input section is related to the function block, set the input information when the input information is related to the function block, and unset the input information when not related.

5. The program creation method according to any one of Claims 1 to 4, further comprising causing the processing device to display:
a confirmation button on the guidance display screen; and
a declaration screen for inputting and setting information about the function block on the display device, based on an operation of the confirmation button.

6. The program creation method according to Claim 5, further comprising causing the processing device to display:
a confirmation button on the declaration screen; and
the function block on the program display screen based on an operation of the confirmation button displayed on the declaration screen.

7. The program creation method according to any one of Claims 1 to 6,
wherein the method has a guidance display mode for displaying the guidance display screen and an input assistant mode for displaying an input assistant screen based on a box input operation on the program display screen, and
wherein the input assistant screen includes a list display area displaying a list of the plurality of function blocks and an explanation display area displaying an explanatory text of a function block selected from the plurality of the function blocks displayed on the list display area.

8. The program creation method according to any one of Claims 1 to 7, wherein the function block includes a motion function block that controls a motor as a device.

9. A program creation assistance device that creates a user program to be executed by a programmable controller, the device comprising:
an input device that performs an input operation for creating the user program;
a display device that displays a program diagram of the user program; and
a processing device that performs display on the display device in accordance with the input operation of the input device,
wherein the processing device displays, on the display device,
a program display screen displaying the program diagram,
a tool screen displaying a tool including a program element for creating the program diagram and a function block having a series of processes including a plurality of functions is integrated into one, and
a guidance display screen displaying the plurality of functions included in the function block and explanatory texts of the plurality of functions in association with each other.

10. The program creation assistance device according to Claim 9, wherein the processing device
displays a list of a plurality of the function blocks and development buttons respectively related to the plurality of the function blocks on the guidance display screen, and
develops and displays a plurality of functions included in a function block among the plurality of the function blocks, based on an operation of a development button of the displayed development buttons to display the explanatory texts related to the plurality of functions in association with the plurality of functions.

11. The program creation assistance device according to Claim 9 or 10, wherein the processing device
displays an operand input button on the guidance display screen, and
displays, by selecting a function from the plurality of functions and operating the operand input button, an operand input section related to the selected function on the guidance display screen.

12. The program creation assistance device, according to Claim 11, wherein the processing device determines whether information input to the operand input section is related to the function block, sets the input information when the input information is related to the function block, and does not set the input information when not related.

13. The program creation assistance device according to any one of Claims 9 to 12, wherein the processing device
displays a confirmation button on the guidance display screen, and
displays, on the display device, a declaration screen for inputting and setting information about the function block, based on an operation of the confirmation button.

14. The program creation assistance device according to Claim 13, wherein the processing device
displays a confirmation button on the declaration screen, and
displays the function block on the program display screen based on an operation of the confirmation button displayed on the declaration screen.

15. The program creation assistance device according to any one of Claims 9 to 14, further comprising: a guidance display mode for displaying the guidance display screen; and
an input assistant mode for displaying an input assistant screen based on a box input operation on the program display screen,
wherein the input assistant screen includes a list display area displaying a list of the plurality of the function blocks, and an explanation display area displaying an explanatory text of a function block selected from the plurality of the function blocks displayed on the list display area.

16. The program creation assistance device according to any one of Claims 9 to 15, wherein the function block includes a motion function block that controls a motor as a device.

17. A programmable controller that displays a program diagram on a display device and creates a user program, the programmable controller causing the display device to display:
a program display screen displaying the program diagram,
a tool screen displaying a tool including a program element for creating the program diagram and a function block having a series of processes including a plurality of functions is integrated into one; and
a guidance display screen displaying the plurality of functions included in the function block and explanatory texts of the plurality of functions in association with each other.
